(19) Europäisches Patentamt
European Patent Office
Office européen des brevets

(11) EP 3 873 983 B1

(12) EUROPEAN PATENT SPECIFICATION

(45) Date of publication and mention
of the grant of the patent:
**13.03.2024 Bulletin 2024/11**

(51) International Patent Classification (IPC):
**C08L 23/12** (2006.01)

(52) Cooperative Patent Classification (CPC):
(C-Sets available)
**C08L 23/12;** C08L 2203/10; C08L 2205/025;
C08L 2207/10; C08L 2314/06 (Cont.)

(21) Application number: **19797251.6**

(22) Date of filing: **30.10.2019**

(86) International application number:
**PCT/EP2019/079596**

(87) International publication number:
**WO 2020/089268 (07.05.2020 Gazette 2020/19)**

(54) **A MOULDED ARTICLE COMPRISING A POLYPROPYLENE COMPOSITION SUITABLE FOR GAMMA-RAY STERILIZATION**

FORMARTIKEL MIT EINER POLYPROPYLENZUSAMMENSETZUNG, DIE FÜR STERILISATION MIT GAMMASTRAHLEN GEEIGNET IST

ARTICLE MOULÉ COMPRENANT UNE COMPOSITION DE POLYPROPYLÈNE CONVENANT À LA STÉRILISATION PAR RAYONS GAMMA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.10.2018 EP 18203378**

(43) Date of publication of application:
**08.09.2021 Bulletin 2021/36**

(73) Proprietor: **Borealis AG
1020 Vienna (AT)**

(72) Inventors:
• **WANG, Jingbo
4021 Linz (AT)**
• **GAHLEITNER, Markus
4021 Linz (AT)**
• **BERNREITNER, Klaus
4021 Linz (AT)**

(74) Representative: **Maiwald GmbH
Elisenhof
Elisenstraße 3
80335 München (DE)**

(56) References cited:
**EP-A1- 3 255 188     WO-A1-2012/093098
WO-A1-2016/080960**

(52) Cooperative Patent Classification (CPC): (Cont.)

C-Sets
**C08L 23/12, C08L 23/12**

**Description**

The present invention is directed to a moulded article comprising a polypropylene composition (C) comprising a base polymer being a first isotactic propylene homopolymer (H-PP) and a second polypropylene (PP2). The present invention is further directed to a sterilized packaging comprising the moulded article, a process for gamma-ray sterilization of the moulded article and the use of the second polypropylene (PP2) in the polypropylene composition (C) for reducing the level of overall migration or reducing discoloration in the polymer composition (C), as well as for improving resistance to gamma-ray sterilization of said polypropylene composition (C).

Polypropylene (PP) is one of the most frequently used plastics in packaging applications. In a continuously increasing part of this market, especially in the pharmaceutical area, but also in food packaging and especially in medical applications (syringes, pouches, tubes etc.), the material is sterilized in either heat (steam), radiation (β / electrons or γ) or chemicals (mostly ethylene oxide). However, sterilization processes will inevitably affect the mechanical and optical properties. For instance, due to strong influence of the radiation, sometimes the discoloration becomes visible in the goods.

The application of radiation, especially gamma radiation, can induce chain scission and similar degradation effects, resulting in a reduced melt viscosity and severe embrittlement. It has also been found out that these degradation events continue for extended periods of time after the actual sterilization process, making long-term studies necessary for studying the effects. Several strategies have been published in the prior art for the reduction of these effects including the use of "mobilizing agents" (paraffinic oils) and special stabilizer formulations. Mobilizing agents have multiple functions in this area. However, only sufficient amounts of mobilizing agents will be able to give a noticeable 'gamma absorbing' activity, while insufficient amounts fail to show a protection effect. Another drawback of using mobilizing agents is migration. It is evident that this fraction can migrate to the surface and the medium which is in contact with the surface.

WO 2012/093098 A1 discloses a sealing material of polypropylene with improved optical performance.

Thus, there is a need in the art for moulded articles formed from a polypropylene material featuring an improved mechanical resistance to gamma-ray sterilization.

The present invention is directed to a moulded article comprising a polypropylene composition (C), the polypropylene composition comprising, based on the total weight of the polypropylene composition (C),

> i) 70.0 to 95.0 wt.-%, based on the overall weight of the polypropylene composition (C), of a first isotactic propylene homopolymer (H-PP), which has
>
>> (i-a) a melt flow rate $MFR_2$ determined according to ISO 1133 at 230 °C and 2.16 kg in the range from 5.0 to 22.0 g/10 min; and
>> (i-b) a melting temperature in the range of 145 to 162 °C as determined by differential scanning calorimetry (DSC); and
>> (i-c) a content of 2,1 erythro regio-defects in the range from 0.1 to 1.3 mol % as determined by $^{13}$C-NMR spectroscopy and
>
> ii) 5.0 to 30.0 wt.-%, based on the overall weight of the polypropylene composition (C), of a second polypropylene (PP2) being different from the first isotactic propylene homopolymer (H-PP) and having a melting temperature Tm as measured by differential scanning calorimetry (DSC) according to ISO 11357 in the range of 50 to 125 °C.

According to still another embodiment, the present invention is directed to sterilized packaging comprising the moulded article according to the present invention.

The present invention is further directed to a process for gamma-ray sterilization of the moulded article according to the present invention, comprising the steps of providing the moulded article according to the present invention and subjecting said moulded article to gamma-ray sterilization.

According to another embodiment, the present invention is directed to uses of the second polypropylene (PP2) as contained in the polymer composition (C) for

> (a) reducing the level of overall migration in the polymer composition (C) as determined according to EN ISO 1186-14:2002 on injection moulded plaques, 60 × 60 × 1 mm$^3$ to less than 10.0 mg/dm$^2$, preferably of less than 8.0 mg/dm$^2$, more preferably less than 6.0 mg/dm$^2$ and even more preferably less than 5.0 mg/dm$^2$;
> (b) improving the resistance to gamma resistance of said polymer composition (C); and/or
> (c) reducing discoloration of the polymer composition (C) after gamma-ray sterilization at 50kGy and 60 days of aging at 80°C as defined by yellowness index (YI) of not higher than 20, more preferably not higher than 16 as determined on injection moulded plaques 60 × 60 × 1 mm$^3$ according to standard method ASTM E313.

In the following, the present invention is described in more detail.

**The polypropylene composition (C)**

The inventive moulded article comprises a polypropylene composition (C) as the main component. Said polypropylene composition (C) comprises a first isotactic propylene homopolymer (H-PP) and a second polypropylene (PP2) as the two main components. The second polypropylene (PP2) preferably functions as a processing aid.

Accordingly, the polypropylene composition (C) preferably comprises

70.0 to 95.0 wt.-%, preferably 75.0 to 93.0 wt.-%, more preferably 80.0 to 92.0 wt.-%, still more preferably 85.0 to 91.0 wt.-%, of the first isotactic propylene homopolymer (H-PP) and
5.0 to 30.0 wt.-%, preferably 7.0 to 25.0 wt.-%, more preferably 9.0 to 20.0 wt.-%, still more preferably 8.0 to 15.0 wt.-% of the second polypropylene (PP2), based on the total weight of the polypropylene composition (C).

The polypropylene composition (C) may include additives (AD). Accordingly, it is preferred that the polypropylene composition (C) comprises, more preferably consists of, 70.0 to 95.0 wt.-%, preferably 75.0 to 93.0 wt.-%, more preferably 80.0 to 92.0 wt.-%, still more preferably 86.0 to 91.0 wt.-%, of the first isotactic propylene homopolymer (H-PP) and 5.0 to 30.0 wt.-%, preferably 7.0 to 25.0 wt.-%, more preferably 8.0 to 20.0 wt.-%, still more preferably 9.0 to 15.0 wt.-% of the second polypropylene (PP2), and 0.0 to 5.0 wt.-%, more preferably 0.05 to 4.0 wt.-%, still more preferably 0.1 to 3.0 wt.-% of additives (AD), based on the total weight of the polypropylene composition (C). The additives (AD) are described in more detail below. The amounts of the components total up to 100 wt.-% of the polypropylene composition (C).

Preferably, the polypropylene composition (C) does not comprise (a) further polymeric material different to the first isotactic propylene homopolymer (H-PP) and the second polypropylene (PP2) in an amount exceeding 5.0 wt.-%, preferably in an amount exceeding 3.0 wt.-%, more preferably in an amount exceeding 2.5 wt.-%, based on the overall weight of the polypropylene composition (C).

Accordingly, it is preferred that the polymeric material of the polypropylene composition (C) consists of the first isotactic propylene homopolymer (H-PP) and the second polypropylene (PP2).

In one embodiment the polypropylene composition (C) comprises the first isotactic propylene homopolymer (H-PP) and the second polypropylene (PP2) in a weight ratio from 75:25 to 95:5 more preferably in a weight ratio from 98:20 to 93:7, still more preferably in a weight ratio from 85:15 to 92:8.

The MFR of the polypropylene composition (C) depends on the desired final end application and can be adjusted with MFR values of the components (PP1) and (PP2) over a broader range, as it will be known for a skilled person. Preferably the polypropylene composition (C) has a melt flow rate $MFR_2$ (230 °C, 2.16 kg) determined according to ISO 1133 in the range of 0.1 to 100.0 g/10 min, more preferably in the range of 1.0 to 70.0 g/10 min, even more preferably in the range of 3.0 to 40.0 g/10min, still more preferably in the range of 5.0 to 25.0 g/10 min, and most preferably in the range of 6.0 to 23.0 g/10min. Another especially preferred range is a melt flow rate $MFR_2$ determined according to ISO1133 at 230 °C and 2.16 kg from 7.0 to 20.0 g/10 min.

Further, the polypropylene composition (C) preferably has a melting temperature of at least 145 °C, more preferably in the range of 145 to 162 °C, still more preferably in the range of 148 to 161 °C, like in the range of 150 to 160 °C.

The polypropylene composition (C) preferably has a xylene soluble content (XCS) below 10.0 wt.-%, preferably from 1.0 to 8.0 wt.-%, more preferably from 1.5 to 6.5 wt.-%, and most preferably from 1.8 to 6.0 wt.-%.

The polypropylene composition (C) preferably has flexural modulus in the range from 1250 to 1800 MPa, more preferably from 1350 to 1600 MPa, and even more preferably from 1400 to 1550 MPa.

In another preferred embodiment, the polypropylene composition (C) is further characterized by a Charpy notched impact strength in the range of 2.5 to 15.0 $kJ/m^2$, preferably in the range of 2.8 to 12.0 $kJ/m^2$ as determined according to ISO 179 1eA, and a retention of said impact strength after gamma sterilization at 50kGy and 60 days of aging of more than 85%, preferably of more than 88%, and most preferably of more than 90%.

Preferably, the polypropylene composition (C) is obtained by melt blending the first isotactic propylene homopolymer (H-PP) and the second polypropylene (PP2) together with optional additives in a ratio as outlined above. The blending is typically carried out as meltmixing in a mixer at elevated temperature above the softening temperature of the polymer component(s) using conventional, e.g. commercially available, mixing equipment, like extruder. The meltmixing and the mixing equipment are well known and documented in the literature. Moreover, the polypropylene composition (C) can be produced e.g. before supplying it to the article convertor or during the production of an article. The mixing conditions and equipment can be chosen by a skilled person.

In the following, the first polypropylene composition (H-PP) and the second polypropylene (PP2) are separately described in more detail.

**The first isotactic propylene homopolymer (H-PP)**

The first isotactic propylene homopolymer (H-PP) is the major component of the polypropylene composition (C), which is included as a main component in the moulded article of the present invention.

The first isotactic propylene homopolymer (H-PP) is a propylene homopolymer.

According to the present invention, the expression "propylene homopolymer", as used for the first isotactic propylene homopolymer, relates to a polypropylene that consists substantially, i.e. of at least 99.4 mol-%, more preferably of at least 99.6 mol-%, still more preferably of at least 99.7 mol-%, like of at least 99.9 mol-%, of propylene units. In another embodiment only propylene units are detectable, i.e. only propylene has been polymerized. The definition "propylene homopolymer" has a well-known meaning in the art.

The first isotactic propylene homopolymer (H-PP) is preferably obtained by polymerization with a metallocene catalyst. This is important because polypropylenes prepared by using an isospecific, $C_2$-symmetric metallocene provide a different microstructure compared to polypropylenes prepared by using Ziegler-Natta (ZN) catalysts. The most significant difference is the presence of regio-defects in metallocene-made polypropylenes. These regio-defects can be of three different types, namely 2,1-erythro (2,1e), 2,1-threo (2,1t) and 3,1 defects. A detailed description of the structure and mechanism of formation of regio-defects in polypropylene can be found in Chemical Reviews 2000,100(4),pages 1316-1327. Accordingly, the term "regio defects" herein defines the sum of 2,1 erythro regio-defects, 2,1 threo regio-defects and 3,1 regio-defects. Consequently, the amount of defects, i.e. regio defects, like 2,1 regio defects, i.e. 2,1 erythro regio-defects and 2,1 threo regio-defects, and 3,1 regio-defects, is indicated by "mol %" of the average percentage of propylene units in the polymer chain.

The first isotactic propylene homopolymer (H-PP) has a sum of 2,1 erythro regio-defects, 2,1 threo regio-defects and 3,1 regio-defects from 0.1 to 1.3 mol%, preferably from 0.2 to 1.1 mol%, even more preferably from 0.2 to 1.0 mol%, and most preferably from 0.3 to 0.8 mol%, as determined by $^{13}$C-NMR spectroscopy.

The presence of such amount of regio-defects is a sufficient (although not a mandatory) feature to unambiguously identify a polypropylene as produced with a metallocene catalyst instead of a Ziegler-Natta-type catalyst.

In another preferred embodiment, the first isotactic propylene homopolymer (H-PP) is characterized by a high isotacticity, defined as pentad regularity [mmmm] of more than 96.0 mol%, preferably of more than 96.5 mol%, most preferably of 97.0 mol%, as determined by $^{13}$C-NMR spectroscopy.

The first isotactic propylene homopolymer (H-PP) has a melt flow rate $MFR_2$ (230 °C, 2.16 kg) determined according to ISO 1133 in the range of 5.0 to 22.0 g/10 min, preferably in the range of 5.0 to 20.0 g/10 min, still more preferably in the range of 6.0 to 18.0 g/10 min.

It is preferred that the first isotactic propylene homopolymer (H-PP) is featured by rather low cold xylene solubles (XCS) content, i.e. by a xylene cold solubles (XCS) below 6.0 wt.-%. Accordingly, the first isotactic propylene homopolymer (H-PP) , has preferably a xylene cold solubles (XCS) content in the range of 0.5 to 7.0 wt.-%, more preferably in the range of 1.5 to 6.0 wt.-%, still more preferably in the range of 2.5 to 5.0 wt.-%.

The amount of xylene cold solubles (XCS) additionally indicates that the first isotactic propylene homopolymer (H-PP) is preferably free of any elastomeric polymer component, like an ethylene propylene rubber. In other words, the first isotactic propylene homopolymer (H-PP) is preferably not a heterophasic polypropylene, i.e. a system consisting of a polypropylene matrix in which an elastomeric phase is dispersed. Such systems are featured by a rather high xylene cold soluble content. In other words, the first isotactic propylene homopolymer (H-PP) is a monophasic polypropylene.

Further, the first isotactic propylene homopolymer (H-PP) is preferably a crystalline propylene homopolymer. The term "crystalline" indicates that the first isotactic propylene homopolymer (H-PP) has a relatively high melting temperature. In particular the first isotactic propylene homopolymer (H-PP) has a melting temperature Tm in the range from 145 to 162°C, preferably in the range from 148 to 161°C, more preferably in the range from 150 to 160°C, as measured by differential scanning calorimetry (DSC) according to ISO 11357.

In another preferred embodiment, the first isotactic propylene homopolymer (H-PP) has a polydispersity (Mw/Mn) in the range from 2.0 to 4.5, more preferably from 2.5 to 4.2, and even more preferably from 2.8 to 4.0, as determined by GPC according to ISO 16014.

The first isotactic propylene homopolymer (H-PP) may contain suitable additives as known in the art. According to this invention, the additives of the first isotactic propylene homopolymer (H-PP) are regarded being part of the "additives (AD)" as described in more detail in the below section "The Additives".

**The second polypropylene (PP2)**

The second polypropylene (PP2) is another essential component of the polypropylene composition (C). The second polypropylene (PP2) is different from the first isotactic propylene homopolymer (H-PP).

The second polypropylene (PP2) has a melting temperature Tm measured by differential scanning calorimetry (DSC) in the range of 50 to 125 °C, more preferably in the range of 55 to 120 °C, still more preferably in the range of 60 to 115°C, still more preferably in the range of 75 to 110 °C, still more preferably in the range of 70 to 100 °C, still more preferably in the range of 70 to 90 °C.

In another preferred embodiment, the second polypropylene (PP2) has either no crystallization or, preferably, only low crystallinity, which is controlled by rather low isotacticity, defined by a triad regularity [mm] in the range from 50.0 to 70.0 mol%, preferably in the range from 55.0 to 65.0 mol%.

Preferably the second polypropylene (PP2) has a molecular weight distribution $M_w/M_n$ in the range of 1.0 to 5.0, preferably 1.0 to 4.0, preferably 1.8 to 3.0, still more preferably in the range of 1.8 to 2.5.

Further, it is preferred that the second polypropylene (PP2) is featured by a rather high molecular weight. Accordingly, it is preferred that the second polypropylene (PP2) has a weight molecular weight $M_w$ in the range of 20 to 300 kg/mol, more preferably in the range of 38 to 200 kg/mol, still more preferably in the range of 40 to 140 kg/mol.

The second polypropylene (PP2) has preferably a tensile modulus determined according to ISO 527 on injection-molded specimens in the range of 50 to 500 MPa, more preferably of 60 to 400 MPa, still more preferably of 70 to 300 MPa, yet more preferably of 70 to 200 MPa, like 80 to 150 MPa.

Preferably, the second polypropylene (PP2) has a melt flow rate $MFR_2$ (230 °C, 2.16 kg) determined according to ISO 1133 in the range of 30 to 3000 g/10 min, more preferably in the range of 35 to 2500 g/10 min, still more preferably in the range of 40 to 2200 g/10 min, like in the range of 45 to 2100 g/10 min, wherein $MFR_2$ values of 1000 g/10 min or above are converted from the B-viscosity (190 °C) determined according to ASTM D 3236. In one embodiment $MFR_2$ of from 45 to 2000 g/10 min, preferably of 45 to 1000 g/10 min, preferably of 45 to 900 g/10 min, preferably of 45 to 700 g/10 min, preferably of 45 to 500 g/10 min, preferably of 45 to 400 g/10 min is desired.

Preferably, the second polypropylene (PP2) has a B-Viscosity (190 °C, ASTM D 3236) in the range of 5000 to 500 000 mPa·s, more preferably of 7000 to 450 000 mPa·s, still more preferably of 8000 to 450 000 mPa·s. In one embodiment the B-Viscosity is preferably in a range of 10 000 to 450 000 mPa·s, more preferably of 20 000 to 450 000 mPa·s, still more preferably of 30 000 to 450 000 mPa·s. An especially preferred range is 40 000 to 400 000 mPa·s.

Further, it is preferred that the second polypropylene (PP2) has a density below 900 kg/m³, preferably in a range of 850 to 900 kg/m³, still more preferably in a range of 855 to 890 kg/m³, like in a range of 857 to 880 kg/m³.

The second polypropylene (PP2) is preferably not heterophasic, but is monophasic according to the definition provided above.

Accordingly, the second polypropylene (PP2) can be a propylene copolymer or a propylene homopolymer.

In case the second polypropylene (PP2) is a propylene copolymer, then comonomers copolymerizable with propylene are preferably selected from ethylene and/or $C_4$ to $C_8$ α-olefins, in particular ethylene and/or $C_4$ to $C_6$ α-olefins, preferably from the group consisting of ethylene, 1-butene and 1-hexene.

In case the second polypropylene (PP2) is a propylene copolymer, then it is preferably a random propylene copolymer (R-PP2). Regarding the terms "random" and "random copolymer", reference is made to the definition provided above with regard to the first polypropylene (PP1).

The second polypropylene (PP2) is preferably a homopolymer of polypropylene, i.e. a propylene homopolymer (H-PP2). Regarding the expression "propylene homopolymer", reference is made to the definition provided above.

The second polypropylene (PP2) may contain suitable additives as known in the art. According to this invention, the additives of the second polypropylene (PP2) are regarded being part of the "additives (AD)" as described in more detail in the below section "The Additives".

The second polypropylene (PP2), is preferably obtained by polymerizing propylene in the presence of a metallocene catalyst. In particular, the second polypropylene (PP2) is preferably obtained by using IDEMITSU metallocene catalyst for producing commercial L-MODU™ polypropylene polymer. Suitable metallocene catalysts are described by Y. Minami et al, Polymer Journal 2015, 45, pages 227-234.

Alternatively, and preferably, the second polypropylene (PP2) is a polypropylene known in the art and commercially available or can be produced in manner as given in the literature as well known for a skilled person in the art. A suitable second polypropylene (PP2) is inter alia commercially available, e.g. one of the commercial propylene homopolymers L-MODU S400, L-MODU S600 or L-MODU S901 supplied by Idemitsu.

**The additives (AD)**

The polypropylene composition (C) may include additives (AD). The additives (AD) may be added separately to the polypropylene composition and/or are introduced as part of the first isotactic propylene homopolymer (H-PP) and the second polypropylene (PP2).

The amount of additives (AD in the polypropylene composition (C) is 0.0 to 5.0 wt.-%, more preferably 0.05 to 4.0 wt.-%, still more preferably 0.1 to 3.0 wt.-% of additives (AD), based on the total weight of the polypropylene composition (C).

Typical additives are acid scavengers, antioxidants, colorants, light stabilisers, plasticizers, slip agents, anti-scratch agents, dispersing agents, processing aids, nucleating agents, lubricants, pigments, fillers, and the like. Especially preferred is the addition of at least one antioxidant and/or at least one light stabilizer and/or at least one nucleating agent. If an antioxidant is present, it is preferably not a hindered amine antioxidant.

The term "antioxidant (AO)" as used herein includes primary and secondary antioxidants. Primary antioxidants act as radical scavengers in the oxidation cycle. Primary antioxidants stabilize polypropylene material by scavenging radicals formed in a polypropylene thereby interrupting the oxidation cycle that slows leads to the degradation of the polypropylene over time. The auto-oxidation cycle in polypropylenes is basically a free-radical initiated chain reaction, which can be inhibited by the presence of radical scavengers. Primary antioxidants includes the class of hindered phenols and hindered amines.

Hindered phenols are sterically hindered phenols, which act as H-donors by forming a phenoxyl radical that is stabilized by steric hindrance of bulky substitutents in the 2,6-position. However, as indicated above, it is preferred that the polypropylene composition (C) of the present invention includes at least one antioxidant (AO) with the proviso that the antioxidant is not a hindered phenol compound or, alternatively, the antioxidant is not a hindered phenol compound and not a hindered amine. The presence of a hindered phenol compound in a polypropylene subjected to gamma-ray sterilization can lead to the degradation of the hindered phenol and the built-up of colored degradation products which negatively affect the optical properties of the polypropylene composition. In other words, the antioxidant when optionally used in the present invention is preferably a hindered amine compound. This class of compounds is also sometimes referred to as hindered amine light stabilizers (HALS). Hindered amine compounds are preferably secondary aromatic amines, which scavenge radicals through a nitroxyl radical formed from the hindered amine. Secondary antioxidants, which also belong to the antioxidants (AO) of the present invention, do not primarily act by scavenging radicals but show a synergistic effect when combined with primary antioxidants. Preferred secondary antioxidants (AO) are phosphites and thio compounds, like thioesters.

Such additives are commercially available and for example described in "Plastic Additives Handbook", 6th edition 2009 of Hans Zweifel (pages 1141 to 1190).

Furthermore, the term "additives (AD)" according to the present invention may also include any carrier materials, for instance polymeric carrier materials, like polymeric carrier material(s) present in optional masterbatch (MB) of an additive (AD). Accordingly the carrier material, like the polymeric carrier material, is part of the additives (AD) and not considered as a "polymeric material" as defined above.

Therefore any polymer being a carrier material for additives (AD) is calculated neither to the amount of first isotactic propylene homopolymer (H-PP) nor the second polypropylene (PP2) as indicated in the present invention, but to the amount of the respective additive (AD).


**The moulded article**


The present invention is directed to a moulded article comprising the polypropylene composition (C) comprising the first isotactic propylene homopolymer (H-PP) and the second polypropylene (PP2) as described above.

The moulded article of the present invention preferably comprises at least 90 wt.-%, more preferably at least 95 wt.-%, yet more preferably at least 98 wt.-% of the polymer composition (C), based on the total weight of the moulded article. Even more preferably, the moulded article consists of the polypropylene composition (C) as defined above.

Preferably, the moulded article has been gamma-ray sterilized at a dose of at least 5 kGy, like at least 15 kGy, or more preferably with a dose of gamma radiation from 15 to 150 kGy, even more preferably from 25 to 100 kGy, or most preferably from 30 to 60 kGy.

The moulded article is preferably characterized by a Charpy notched impact strength in the range of 2.5 to 15.0 kJ/m$^2$, as determined according to ISO 179 1eA, and a retention of said impact strength after gamma sterilization at 50kGy and 60 days of aging of more than 75%, preferably of more than 80%, and most preferably of more than 85%.

The moulded article according to the present invention is preferably an injection moulded article. With respect to the field of application of the moulded article and its preferred use, the moulded article preferably is a medical, pharmaceutical or diagnostic article.

With respect to its use in the medical or pharmaceutical field or its use for diagnostic applications, the moulded article according to the present invention is preferably selected from the list of articles consisting of catheters, intravenous sets, laparoscopic instrument components, surgery instrument components, surgical trays, caddies, drug delivery devices, surgical tools, in-vitro diagnostics, tube connectors, tube closures, valves, vials, syringes, plungers, laboratory dishes, and droppers.

In another aspect, the present invention is directed to a sterilized packaging comprising the moulded article of the present invention comprising the polypropylene composition (C).

In another aspect, the present invention is also directed to a process for gamma-ray sterilization of the moulded article as herein defined, comprising the steps of:

- providing the moulded article, and

- subjecting said moulded article to gamma-ray sterilization.

Preferably, in said process, the gamma-ray sterilization operation is carried out at a dose in the range of 15 to 150 kGy.

In another aspect, the present invention is directed to the use of the second polypropylene (PP2) as herein defined in the polymer composition (C) as defined above for

(a) reducing the level of overall migration in said polymer composition (C) as determined according to EN ISO 1186-14:2002 on injection moulded plaques, $60 \times 60 \times 1$ mm$^3$ to less than 80.0 mg/dm$^2$, preferably of less than 10.0 mg/dm$^2$, more preferably less than 8.0 mg/dm$^2$ and even more preferably less than 6.0 mg/dm$^2$; and/or

(b) improving the resistance to gamma resistance of said polymer composition (C); and/or

(c) reducing discoloration of said polymer composition (C) after gamma-ray sterilization at 50kGy and 60 days of aging at 80°C as defined by yellowness index (YI) of not higher than 20, more preferably not higher than 16 as determined on injection moulded plaques $60 \times 60 \times 1$ mm$^3$ according to standard method ASTM E313.

The present invention will be described in further detail by the examples provided below.

## EXAMPLES

### A. Measuring methods

The following definitions of terms and determination methods apply for the above general description of the invention as well as to the below examples unless otherwise defined. **MFR$_2$ (230 °C)** is measured according to ISO 1133 (230 °C, 2.16 kg load).

### Quantification of microstructure by NMR spectroscopy

Quantitative nuclear-magnetic resonance (NMR) spectroscopy was used to quantify the comonomer content and comonomer sequence distribution of the polymers. Quantitative $^{13}$C{$^1$H} NMR spectra were recorded in the solution-state using a Bruker Advance III 400 NMR spectrometer operating at 400.15 and 100.62 MHz for $^1$H and $^{13}$C respectively. All spectra were recorded using a $^{13}$C optimised 10 mm extended temperature probehead at 125°C using nitrogen gas for all pneumatics. Approximately 200 mg of material was dissolved in 3 ml of $1,2$-tetrachloroethane-$d_2$ (TCE-$d_2$) along with chromium-(III)-acetylacetonate (Cr(acac)$_3$) resulting in a 65 mM solution of relaxation agent in solvent (Singh, G., Kothari, A., Gupta, V., Polymer Testing 28 5 (2009), 475). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution and quantitatively needed for accurate ethylene content quantification. Standard single-pulse excitation was employed without NOE, using an optimised tip angle, 1 s recycle delay and a bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. Quantitative $^{13}$C{$^1$H} NMR spectra were processed, integrated and relevant quantitative properties determined from the integrals using proprietary computer programs. All chemical shifts were indirectly referenced to the central methylene group of the ethylene block (EEE) at 30.00 ppm using the chemical shift of the solvent. This approach allowed comparable referencing even when this structural unit was not present. Characteristic signals corresponding to the incorporation of ethylene were observed Cheng, H. N., Macromolecules 17 (1984), 1950).

For polypropylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

Specifically the influence of regio defects and comonomer on the quantification of the tacticity distribution was corrected for by subtraction of representative regio defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (\ mmmm\ /\ \text{sum of all pentads}\ )$$

In an analogous way, the content of isotactic triads [mm] was determined.

The presence of 2,1 erythro regio defects was indicated by the presence of the two methyl sites at 17.7 and 17.2 ppm and confirmed by other characteristic sites.

Characteristic signals corresponding to other types of regio defects were not observed (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.7 and 17.2 ppm:

$$P_{21e} = (\ I_{e6} + I_{e8}\ )\ /\ 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio defects:

$$P_{total} = P_{12} + P_{21e}$$

The mole percent of 2,1 erythro regio defects was quantified with respect to all propene:

$$[21e]\ mol\% = 100 * (\ P_{21e}\ /\ P_{total}\ )$$

For copolymers characteristic signals corresponding to the incorporation of ethylene were observed (Cheng, H. N., Macromolecules 17 (1984), 1950).

With regio defects also observed (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) correction for the influence of such defects on the comonomer content was required.

The comonomer fraction was quantified using the method of Wang et. al. (Wang, W-J., Zhu, S., Macromolecules 33 (2000), 1157) through integration of multiple signals across the whole spectral region in the $^{13}C\{^1H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S.,

Macromolecules 33 (2000), 1157). Equations used for absolute propylene content were not modified.

The mole percent comonomer incorporation was calculated from the mole fraction:

$$E\ [mol\%] = 100 * fE$$

The weight percent comonomer incorporation was calculated from the mole fraction:

$$E\ [wt\%] = 100 * (fE * 28.06) / ((fE * 28.06) + ((1-fE) * 42.08))$$

The comonomer sequence distribution at the triad level was determined using the analysis method of Kakugo et al. (Kakugo, M., Naito, Y., Mizunuma, K., Miyatake, T. Macromolecules 15 (1982) 1150). This method was chosen for its robust nature and integration regions slightly adjusted to increase applicability to a wider range of comonomer contents.

**Number average molecular weight ($M_n$), weight average molecular weight ($M_w$) and molecular weight distribution (MWD)**

Molecular weight averages (Mw, Mn), and the molecular weight distribution (MWD) or polydispersity, i.e. the ratio Mw/Mn (wherein Mn is the number average molecular weight and Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and lx Olexis Guard columns from Polymer Laboratories and 1,2,4-trichlorobenzene (TCB, stabilized with 250 mg/L 2,6-Di tert butyl-4-methyl-phenol) as solvent at 160 °C and at a constant flow rate of 1 mL/min. 200 μL of sample solution were injected per analysis. The column set was calibrated using universal calibration (according to ISO 16014-2:2003) with at least 15 narrow MWD polystyrene (PS) standards in the range of 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**DSC analysis, melting temperature ($T_m$) and melting enthalpy ($H_m$), crystallization temperature ($T_c$) and crystallization enthalpy ($H_c$):** measured with a TA Instrument Q200 differential scanning calorimetry (DSC) on 5 to 7 mg samples. DSC is run according to ISO 3146 / part 3 /method C2 in a heat / cool / heat cycle with a scan rate of 10 °C/min in the temperature range of -30 to +225°C. Crystallization temperature ($T_c$) and crystallization enthalpy ($H_c$) are determined from the cooling step, while melting temperature ($T_m$) and melting enthalpy ($H_m$) are determined from the second heating step.

**Density** of the polymer is measured according to ISO 1183-187. Sample preparation is done by compression moulding in accordance with ISO 1872-2:2007.

**The xylene solubles (XCS, wt.-%):** Content of xylene cold solubles (XCS) is determined at 25 °C according ISO 16152; first edition; 2005-07-01. The part which remains insoluble is the xylene cold insoluble (XCI) fraction.

**Flexural Modulus:** The flexural modulus was determined in 3-point-bending according to ISO 178 on injection molded specimens of 80 × 10 × 4 mm prepared in accordance with ISO 294-1:1996.

**Impact:** Charpy notched impact strength is determined according to ISO 179 / 1eA at 23 °C by using injection moulded test specimens as described in EN ISO 1873-2 (80 × 10 × 4 mm). **Haze** was determined according to ASTM D1003-00 on 60x60x1 mm³ plaques injection molded in line with EN ISO 1873-2 using a melt temperature of 200°C and on cast films of 50 μm thickness produced on a monolayer cast film line with a melt temperature of 220°C and a chill roll temperature of 20°C.

**B-Viscosity** was determined according to ASTM D 3236 at 190 °C.

**Overall migration**

Overall Migration is determined according to EN ISO 1186-14:2002 on injection moulded plaques, 60 × 60 × 1 mm³.

**Irradiation**

Injection moulded test specimen of 80x10x4 mm³ for Charpy or 60x60x1 mm³ for Yellowness Index, both prepared in accordance with EN ISO 1873-2, were exposed to gamma-ray irradiation at 50 kGy using a 60Co γ-ray source. Consecutively the samples were aged at 80°C in a circulating air oven up to 60 days as indicated below. Once the desired time was reached, the samples were taken out from the oven and aged at 23°C for 24 hours before the impact test according to Charpy ISO 179/1eA+23°C was performed.

Parallel to the irradiated samples, according non-irradiated samples were aged at 80 °C in a circulating air oven up to 60 days.

## B. Examples

### 1. The first propylene homopolymer (H-PP1):

The first propylene homopolymer (H-PP1) was prepared by polymerization using a metallocene catalyst as described in detail in WO 2015/011135 A1 (metallocene complex MC1 with methylaluminoxane (MAO) and borate resulting in Catalyst 3 described in WO 2015/011135 A1) with the proviso that the surfactant is 2,3,3,3-tetrafluoro-2-(1,1,2,2,3,3,3-heptafluoropropoxy)-1-propanol. The metallocene complex (MC1 in WO 2015/011135 A1) is prepared as described in WO 2013/007650 A1 (metallocene E2 in WO 2013/007650 A1).

### Off-line prepolymerization procedure

The catalyst MC-1 was pre-polymerized according to the following procedure: Off-line prepolymerization experiment was done in a 125 mL pressure reactor equipped with gas-feeding lines and an overhead stirrer. Dry and degassed perfluoro-1.3-dimethylcyclohexane (15 cm$^3$) and the desired amount of the catalyst to be pre-polymerized were loaded into the reactor inside a glove box and the reactor was sealed. The reactor was then taken out from the glove box and placed inside a water cooled bath kept at 20°C. The overhead stirrer and the feeding lines were connected and stirring speed set to 450 rpm. The experiment was started by opening the propylene feed into the reactor. The total pressure in the reactor was raised to about 5 barg and held constant by propylene feed via mass flow controller until the target degree of polymerization was reached (10 min). The reaction was stopped by flashing the volatile components. Inside glove box, the reactor was opened and the content poured into a glass vessel. The perfluoro-1,3-dimethylcyclohexane was evaporated until a constant weight was obtained to yield the pre-polymerized catalyst.

**Table 1: Off-line prepolymerization**

| Metallocene | Catalyst amount | Prepolymerization Degree |
|---|---|---|
|  | [mg] | [wt%/wt%] |
| MC-1 | 104 | 3.19 |

**Table 2: Preparation of propylene homopolymer (H-PP1) and final properties**

|  |  | H-PP1 |
|---|---|---|
| **Prepolymerization** |  |  |
| Temperature | °C | 20 |
| Pressure | kPa | 5304 |
| Residence Time | h | 0.41 |
| **Loop** |  |  |
| Temperature | °C | 75 |
| Pressure | kPa | 5332 |
| Residence Time | h | 0.4 |
| H2/C3-feeding | mol/kmol | 0.25 |
| Split | wt% | 46 |
| MFR | g/10min | 9.7 |
| **First Gas Phase Reactor** |  |  |
| Temperature | °C | 85 |

(continued)

| First Gas Phase Reactor | | |
|---|---|---|
| Pressure | kPa | 2000 |
| H2/C3-Feeding | mol/kmol | 3.3 |
| Split | wt% | 54 |
| MFR | g/10min | 8.5 |
| **Final (H-PP-1)** | | |
| MFR | g/10min | 7.5 |
| TM | °C | 153 |
| 2,1 + 3,1 erythro defects | mol% | 0.7 |
| mmmm% | mol% | 98.3 |

## 2. The second polypropylene (PP2)

As the second polypropylene (PP2), the commercial polypropylene material L-MODU S400 by Idemitsu was used. The properties of this second polypropylene (PP2) material are summarized in Table 3.

**Table 3** Properties of the second polypropylene (PP2) L-MODU S400 (Idemitsu)

| | | PP2 |
|---|---|---|
| MFR | [g/10 min] | 2000 |
| Tm | [°C] | 79 |
| Isotactic triads [mm] | [mol%] | 63.5 |
| Density | [kg/m$^3$] | 870 |
| Tensile modulus | [MPa] | 90 |
| $M_W$ | [kg/mol] | 45 |
| polydispersity | [Mw/Mn] | 2 |

**Comparative Example CE2 was** the commercial polypropylene HD810MO (Bormed™ of Borealis AG) having a melt flow rate $MFR_2$ of 10.0 g/10 min, a melting temperature Tm of 164 °C, and a density of 907 kg/m$^3$.

## 3. Preparation of the polypropylene composition (C)

The polypropylene compositions (C) were prepared by compounding of the polymer components (H-PP) and (PP2) and additivation with the list of additives as described below. The properties of the comparative and inventive compositions are found in Tables 4 and 5.

**Table 4 Composition and properties of the comparative and inventive examples**

| | unit | CE1 | CE2 | IE1 | IE2 | IE3 |
|---|---|---|---|---|---|---|
| **H-PP1** | wt% | 94.5 | | 89.4 | 89.5 | 89.6 |
| Calcium Stearate | wt% | 0.05 | | 0.05 | 0.05 | 0.05 |
| Arenox DL | wt% | 0.21 | | 0.21 | | |
| Tinuvin 622 | wt% | | | | 0.15 | 0.15 |
| Hostavin NOW | wt% | | | | | |
| Irgafos 168 | wt% | 0.15 | | 0.15 | 0.15 | |

(continued)

| | unit | CE1 | CE2 | IE1 | IE2 | IE3 |
|---|---|---|---|---|---|---|
| FS042 | wt% | | | | | 0.05 |
| Primol 352 | wt% | 4.9 | | | | |
| Millad 3988 | wt% | 0.15 | | 0.15 | 0.15 | 0.15 |
| **S400 (PP2)** | wt% | | | 10 | 10 | 10 |
| | | | | | | |
| MFR | g/10min | 16.8 | 9.5 | 11.7 | 11.6 | 12.8 |
| Tc | °C | 125 | 130 | 126 | 126 | 125 |
| Tm | °C | 155 | 164 | 156 | 156 | 156 |
| Hm | J/g | 97 | 102 | 90 | 89 | 91 |
| XCS | wt% | 5.5 | 7.9 | 4.8 | 4.9 | 5.0 |
| Flexural modulus | MPa | 1233 | 1201 | 1418 | 1460 | 1457 |
| NIS, 23°C | kJ/m2 | 4.5 | 5.5 | 3.2 | 3.0 | 3.2 |
| Haze (1mm) | % | 17 | 17 | 16 | 22 | 24 |
| Overall migration (1mm) | mg/dm$^2$ | 48.0 | 82.0 | 3.8 | 2.2 | 1.8 |

| | |
|---|---|
| Arenox DL | dodecyl 3-{[3-(dodecyloxy)-3-oxopropyl]sulfanyl}propanoate (CAS-no. 123-28-4); |
| Tinuvin 622 | Dimethyl succinate polymer with 4-hydroxy-2,2,6,6-tetramethyl-1-piperidine ethanol commercially available from BASF SE; |
| Hostavin NOW | 2,2,6,6-tetramethylpiperidin-4-yl-hexadecanoate and 2,2,6,6-tetramethylpiperidin-4-yl-octadecanoate, reaction product with an oxidized polyethylene wax from Clariant; |
| Irgafos 168 | Tris(2,4-tert-butylphenyl) Phosphite commercially available from BASF SE; |
| FS042 | N,N-di(alkyl)hydroxylamine produced by the direct oxidation of N,N-di(hydrogenated tallow) amine (Irgastab® FS-042, CAS-no. 143925-92-2, BASF SE); |
| Primol 352 | While oil; a purified mixture of liquid saturated hydrocarbons; Kinematic viscosity (40°C; ASTM D 445) = 65.0-75.0 mm$^2$/s; Kinematic viscosity (100°C; ASTM D 445) = 8.5 mm$^2$/s; Average molecular weight (ASTM D 2502) = 480, commercially available from ExxonMobil; |
| Millad 3988 | is 1,3:2,4 bis(3,4-dimethylbenzylidene)sorbitol (CAS-no. 135861-56-2), commercially available from Milliken; |

As derivable from the values shown in Table 4, the inventive compositions have much lower overall migration than the comparative compositions although the mechanical and optical properties of the compositions were comparable. The mechanical profile with respect to toughness have been analysed based on retention of Charpy notched impact strength (% NIS retention) of samples after gamma-ray sterilization and aging after 60 days. Comparative and inventive samples were prepared from injection moulded specimen having size of $60\times60\times1mm^3$. Samples were sterilized at 50kGy and aged at 80°C for 2 months (60 days) before measurement of Charpy notched impact strength (Table 5).

**Table 5 Toughness after gamma-ray sterilization and up to 60 days of aging**

| NIS after N days | CE1* | CE1 | CE2* | CE2 | IE1* | IE1 | IE2* | IE2 | IE3* | IE3 |
|---|---|---|---|---|---|---|---|---|---|---|
| 1 | 5.05 | 3.97 | 5.77 | 4,51 | 3.88 | 3.7 | 3.88 | 3.44 | 3.89 | 3.79 |
| 7 | 5.07 | 3.99 | 6.05 | 4,67 | 3.77 | 3.78 | 3.77 | 3.53 | 4.28 | 3.66 |
| 14 | 5.11 | 3.86 | 5.88 | 4,66 | 3.94 | 3.9 | 3.94 | 3.7 | 4.11 | 3.97 |

(continued)

| NIS after N days | CE1* | CE1 | CE2* | CE2 | IE1* | IE1 | IE2* | IE2 | IE3* | IE3 |
|---|---|---|---|---|---|---|---|---|---|---|
| 30 | 5.21 | 4.05 | 6 | 4,66 | 3.98 | 3.81 | 3.98 | 3.99 | 4.5 | 3.82 |
| 60 | 5.21 | 4.08 | 6.26 | 4,97 | 4.25 | 4.14 | 4.25 | 3.68 | 4.35 | 3.78 |

Retention of Charpy notched impact strength (NIS %) was determined by comparing the values measured for NIS after 60 days without/with gamma-ray sterilization of the corresponding samples (Table 6).

**Table 6 Retention of toughness after gamma-ray sterilization and 60 days of aging**

| | CE1 | CE2 | IE1 | IE2 | IE3 |
|---|---|---|---|---|---|
| Retention of Charpy notched impact strength (NIS %) | 78 | 79 | 97 | 87 | 87 |

Charpy notched impact strength as well as % NIS retention were essentially improved in the inventive materials relative to the comparative samples.

Analysis of discoloration after gamma-ray sterilization has been determined by measurement of yellowness index (YI). Samples were sterilized at 50kGy and aged at 80°C for 2 months (60 days). Yellowness index of the aged samples was successively determined during/after ageing at 1, 7, 14, 30 and 60 days (Table 7).

**Table 7 Successive discoloration over a period of 60 days of aging**

| YI, n days | CE1* | CE1 | CE2* | CE2 | IE1* | IE1 | IE2* | IE2 | IE3* | IE3 |
|---|---|---|---|---|---|---|---|---|---|---|
| 1 | -0.02 | 4.93 | 0.16 | 7.98 | 0 | 6.42 | 0.42 | 4.74 | 0.38 | 1.26 |
| 7 | 0.14 | 8.14 | 0.24 | 16.28 | 0.18 | 10.02 | 0.6 | 4.78 | 0.56 | 1.92 |
| 14 | -0.02 | 9.18 | 0.14 | 17.3 | 0.04 | 10.12 | 0.54 | 5.02 | 0.36 | 2.38 |
| 30 | 0.16 | 11.68 | 0.18 | 20.22 | 0.08 | 12.18 | 0.68 | 5.4 | 0.4 | 2.64 |
| 60 | 0.16 | 14.58 | 0.26 | 25.14 | 0.28 | 12.94 | 0.88 | 5.98 | 0.56 | 3.7 |
| *): samples not gamma sterilized; | | | | | | | | | | |

It was found that the degree of discoloration of the materials as indicated by yellowness index after gamma-ray sterilization and ageing is substantially lower in the inventive materials compared to the comparative materials.

**Claims**

1.  Moulded article comprising a polypropylene composition (C), the polypropylene composition comprising, based on the total weight of the polypropylene composition (C),

    i) 70.0 to 95.0 wt.-%, based on the overall weight of the polypropylene composition (C), of a first isotactic propylene homopolymer (H-PP), which has

    (i-a) a melt flow rate $MFR_2$ determined according to ISO1133 at 230 °C and 2.16 kg in the range from 5.0 to 22.0 g/10 min;
    (i-b) a melting temperature in the range of 145 to 162 °C as determined by differential scanning calorimetry (DSC); and
    (i-c) a content of 2,1 erythro regio-defects in the range from 0.1 to 1.3 mol % as determined by $^{13}$C-NMR spectroscopy
    and

    ii) 5.0 to 30.0 wt.-%, based on the overall weight of the polypropylene composition (C), of a second polypropylene (PP2) being different from the first isotactic propylene homopolymer (H-PP) and having a melting temperature Tm as measured by differential scanning calorimetry (DSC) according to ISO 11357 in the range of 50 to 125 °C.

2. The moulded article according to claim 1, wherein the polypropylene composition (C) has

    (a) a melting temperature Tm in the range of 150 to 160°C as measured by differential scanning calorimetry (DSC) according to ISO 11357,
    and/or
    (b) a melt flow rate $MFR_2$ determined according to ISO 1133 at 230 °C and 2.16 kg in the range from 2.0 to 15.0 g/10 min.

3. The moulded article according to claim 1 or 2, wherein the combined amount of the first isotactic propylene homopolymer (H-PP) and the second polypropylene (PP-2) in the polypropylene composition (C) is at least 95 wt.-%, and up to 5 wt.-% are additives (AD), based on the total weight of the polypropylene composition (C).

4. The moulded article according to any one of the preceding claims 1 to 3, wherein the polypropylene composition (C) has a xylene soluble content (XCS) below 10.0 wt.-%, preferably from 1.0 to 8.0 wt.-%.

5. The moulded article according to any one of the preceding claims 1 to 4, wherein the second polypropylene (PP2) has a polydispersity (Mw/Mn) in the range of 1.8 to 3.0, and/or a weight molecular weight $M_w$ in the range of 20 to 300 kg/mol, and/or a density below 895 kg/m$^3$, preferably in a range of 850 to 900 kg/m$^3$, and/or a melting temperature Tm in the range of 70 to 100 °C.

6. The moulded article according to any one of the preceding claims 1 to 5, wherein the polypropylene composition (C) does not comprise a further polymeric material different to the first isotactic propylene homopolymer (H-PP) and the second polypropylene (PP2) in an amount exceeding 5.0 wt.-%, preferably exceeding 2.5 wt.-%, based on the overall weight of the polypropylene composition (C).

7. The moulded article according to any one of the preceding claims 1 to 6, wherein the first isotactic propylene homopolymer (H-PP) is **characterized by** a high isotacticity, defined as pentad regularity <mmmm> of more than 96.0 mol% as determined by $^{13}$C-NMR spectroscopy.

8. The moulded article according to any one of the preceding claims 1 to 7, wherein
wherein the first isotactic propylene homopolymer (H-PP) is prepared in the presence of a metallocene catalyst.

9. The moulded article according to any one of the preceding claims 1 to 8, wherein the moulded article is an injection moulded article, preferably a medical, pharmaceutical or diagnostic article, or even more preferably an article selected from the list of articles consisting of catheters, intravenous sets, laparoscopic instrument components, surgery instrument components, surgical trays, caddies, drug delivery devices, surgical tools, in-vitro diagnostics, tube connectors, tube closures, valves, vials, syringes, plungers, laboratory dishes, and droppers.

10. The moulded article according to any one of the preceding claims 1 to 9 having a level of overall migration in the polymer composition (C) as determined according to EN ISO 1186-14:2002 on injection moulded plaques, 60 × 60 × 1 mm$^3$ of less than 10.0 mg/dm$^2$, preferably of less than 8.0 mg/dm$^2$, more preferably less than 6.0 mg/dm$^2$ and even more preferably less than 5.0 mg/dm$^2$.

11. The moulded article according to any one of the preceding claims 1 to 10 having a degree of discoloration of the polymer composition (C) after gamma-ray sterilization at 50kGy and 60 days of aging at 80°C as defined by yellowness index (YI) of not higher than 20, more preferably not higher than 16 as determined on injection moulded plaques 60 × 60 × 1 mm$^3$ according to standard method ASTM E313.

12. The moulded article according to any one of the preceding claims 1 to 11, wherein the moulded article is **characterized by** a Charpy notched impact strength in the range of 2.5 to 15.0 kJ/m$^2$, as determined according to ISO 179 1eA, and a retention of said impact strength after gamma sterilization at 50kGy and 60 days of aging of more than 85%, preferably of more than 88%, and most preferably of more than 90%.

13. Sterilized packaging comprising the moulded article according to any one of the preceding claims 1 to 12.

14. Process for gamma-ray sterilization of the moulded article according to any one of the preceding claims 1 to 12, comprising the steps of:

- providing the moulded article according to any one of claims 1 to 12, and
- subjecting said moulded article to gamma-ray sterilization, preferably carried out at a dose in the range of 15 to 150 kGy..

15. Use of the second polypropylene (PP2) according to claims 1 or 5 in the polymer composition (C) according to any one of the preceding claims 1 to 8for

(a) reducing the level of overall migration in the polymer composition (C) as determined according to EN ISO 1186-14:2002 on injection moulded plaques, $60 \times 60 \times 1$ mm$^3$ to less than 10.0 mg/dm$^2$, preferably of less than 8.0 mg/dm$^2$, more preferably less than 25.0 mg/dm$^2$ and even more preferably less than 6.0 mg/dm$^2$; and/or
(b) improving the resistance to gamma ray sterilization of said polymer composition (C); and/or
(c) reducing discoloration of the polymer composition (C) after gamma-ray sterilization at 50kGy and 60 days of aging at 80°C as defined by yellowness index (YI) of not higher than 20, more preferably not higher than 16 as determined on injection moulded plaques $60 \times 60 \times 1$ mm$^3$ according to standard method ASTM E313.

## Patentansprüche

1. Formartikel, der eine Polypropylenzusammensetzung (C) enthält, wobei die Polypropylenzusammensetzung, bezogen auf das Gesamtgewicht der Polypropylenzusammensetzung (C), Folgendes umfasst,

i) 70,0 bis 95,0 Gew.-%, bezogen auf das Gesamtgewicht der Polypropylenzusammensetzung (C), eines ersten isotaktischen Propylenhomopolymers (H-PP), das Folgendes aufweist

(i-a) eine Schmelzflussrate MFR$_2$ bestimmt nach ISO1133 bei 230 °C und 2,16 kg im Bereich von 5,0 bis 22,0 g/10 min;
(i-b) eine Schmelztemperatur im Bereich von 145 bis 162 °C, bestimmt durch Differential-Scanning-Kalorimetrie (DSC); und
(i-c) einen Gehalt an 2,1-Erythro-Regiodefekten im Bereich von 0,1 bis 1,3 Mol-%, bestimmt durch $^{13}$C-NMR-Spektroskopie
und

ii) 5,0 bis 30,0 Gew.-%, bezogen auf das Gesamtgewicht der Polypropylenzusammensetzung (C), eines zweiten Polypropylens (PP2), das sich von dem ersten isotaktischen Propylenhomopolymer (H-PP) unterscheidet und eine Schmelztemperatur Tm, gemessen durch Differential-Scanning-Kalorimetrie (DSC) gemäß ISO 11357, im Bereich von 50 bis 125 °C aufweist.

2. Formartikel nach Anspruch 1, wobei die Polypropylenzusammensetzung (C) Folgendes aufweist

(a) eine Schmelztemperatur Tm im Bereich von 150 bis 160 °C, gemessen durch Differential-Scanning-Kalorimetrie (DSC) gemäß ISO 11357,
und/oder
(b) eine Schmelzflussrate MFR$_2$ bestimmt nach ISO1133 bei 230 °C und 2,16 kg im Bereich von 2,0 bis 15,0 g/10 min.

3. Formartikel nach Anspruch 1 oder 2, wobei die kombinierte Menge des ersten isotaktischen Propylenhomopolymers (H-PP) und des zweiten Polypropylens (PP-2) in der Polypropylenzusammensetzung (C) mindestens 95 Gew.-% beträgt und bis zu 5 Gew.-% Additive (AD) sind, bezogen auf das Gesamtgewicht der Polypropylenzusammensetzung (C).

4. Formartikel nach einem der vorhergehenden Ansprüche 1 bis 3, wobei die Polypropylen-Zusammensetzung (C) einen in Xylol löslichen Gehalt (XCS) von weniger als 10,0 Gew.-%, vorzugsweise von 1,0 bis 8,0 Gew.-%, aufweist.

5. Formartikel nach einem der vorhergehenden Ansprüche 1 bis 4, wobei das zweite Polypropylen (PP2) eine Polydispersität (Mw/Mn) im Bereich von 1,8 bis 3,0 und/oder ein Gewichtsmolekulargewicht M$_w$ im Bereich von 20 bis 300 kg/mol und/oder eine Dichte unter 895 kg/m$^3$ , vorzugsweise in einem Bereich von 850 bis 900 kg/m$^3$ , und/oder

eine Schmelztemperatur Tm im Bereich von 70 bis 100 °C aufweist.

6. Formartikel nach einem der vorhergehenden Ansprüche 1 bis 5, wobei die Polypropylenzusammensetzung (C) kein weiteres polymeres Material, das sich von dem ersten isotaktischen Propylenhomopolymer (H-PP) und dem zweiten Polypropylen (PP2) unterscheidet, in einer Menge von mehr als 5,0 Gew.-%, vorzugsweise mehr als 2,5 Gew.-%, bezogen auf das Gesamtgewicht der Polypropylenzusammensetzung (C), enthält.

7. Formartikel nach einem der vorhergehenden Ansprüche 1 bis 6, wobei das erste isotaktische Propylenhomopolymer (H-PP) durch eine hohe Isotaktizität, definiert als Pentadenregelmäßigkeit <mmmm> von mehr als 96,0 mol%, bestimmt durch $^{13}$C-NMR-Spektroskopie, gekennzeichnet ist.

8. Formartikel nach einem der vorhergehenden Ansprüche 1 bis 7, wobei das erste isotaktische Propylenhomopolymer (H-PP) in Gegenwart eines Metallocenkatalysators hergestellt wird.

9. Formartikel nach einem der vorhergehenden Ansprüche 1 bis 8, wobei der Formartikel ein Spritzgussartikel ist, vorzugsweise ein medizinischer, pharmazeutischer oder diagnostischer Artikel, oder noch bevorzugter ein Artikel, der aus der Liste der Artikel ausgewählt ist, die aus Kathetern, intravenösen Sets, laparoskopischen Instrumentenkomponenten, chirurgischen Instrumentenkomponenten, chirurgischen Tabletts, Caddies, Arzneimittelverabreichungsvorrichtungen, chirurgischen Werkzeugen, In-vitro-Diagnostika, Schlauchanschlüssen, Schlauchverschlüssen, Ventilen, Fläschchen, Spritzen, Kolben, Laborschalen und Tropfern besteht.

10. Formartikel nach einem der vorhergehenden Ansprüche 1 bis 9 mit einem Gesamtmigrationsgrad in der Polymerzusammensetzung (C), bestimmt nach EN ISO 1186-14:2002 an spritzgegossenen Platten, $60 \times 60 \times 1$ mm$^3$, von weniger als 10,0 mg/dm$^2$, vorzugsweise von weniger als 8,0 mg/dm$^2$, weiter bevorzugt von weniger als 6,0 mg/dm$^2$ und noch weiter bevorzugt von weniger als 5,0 mg/dm$^2$.

11. Formartikel nach einem der vorhergehenden Ansprüche 1 bis 10 mit einem Verfärbungsgrad der Polymerzusammensetzung (C) nach Gammastrahlensterilisation bei 50 kGy und 60 Tagen Alterung bei 80°C, definiert durch den Vergilbungsindex (YI), von nicht mehr als 20, vorzugsweise nicht mehr als 16, bestimmt an spritzgegossenen Plättchen von $60 \times 60 \times 1$ mm$^3$ gemäß der Standardmethode ASTM E313.

12. Formartikel nach einem der vorhergehenden Ansprüche 1 bis 11, wobei der Formartikel durch eine Charpy-Kerbschlagzähigkeit im Bereich von 2,5 bis 15,0 kJ/m$^2$, bestimmt nach ISO 179 1eA, und eine Beibehaltung der Schlagzähigkeit nach Gammasterilisation bei 50 kGy und 60 Tagen Alterung von mehr als 85 %, vorzugsweise von mehr als 88 % und am meisten bevorzugt von mehr als 90 % gekennzeichnet ist.

13. Sterilisierte Verpackung, die den Formartikel nach einem der vorangehenden Ansprüche 1 bis 12 enthält.

14. Verfahren zur Gammastrahlensterilisation des Formartikels nach einem der vorangehenden Ansprüche 1 bis 12, das die folgenden Schritte umfasst:

   - Bereitstellen des Formartikels nach einem der Ansprüche 1 bis 12, und
   - Unterziehen des Formartikels einer Gammastrahlensterilisation, die vorzugsweise mit einer Dosis im Bereich von 15 bis 150 kGy. durchgeführt wird.

15. Verwendung des zweiten Polypropylens (PP2) nach Anspruch 1 oder 5 in der Polymerzusammensetzung (C) nach einem der vorhergehenden Ansprüche 1 bis 8 zur

   (a) Verringerung der Gesamtmigration in der Polymerzusammensetzung (C), bestimmt nach EN ISO 1186-14:2002 an spritzgegossenen Platten, $60 \times 60 \times 1$ mm$^3$, auf weniger als 10,0 mg/dm$^2$, vorzugsweise auf weniger als 8,0 mg/dm$^2$, weiter bevorzugt auf weniger als 25,0 mg/dm$^2$ und noch weiter bevorzugt auf weniger als 6,0 mg/dm$^2$ ;
   und/oder
   (b) Verbesserung der Sterilisationsbeständigkeit der Polymerzusammensetzung (C) gegenüber Gammastrahlen;
   und/oder
   (c) Verringerung der Verfärbung der Polymerzusammensetzung (C) nach Gammastrahlensterilisation bei 50 kGy und 60 Tagen Alterung bei 80°C, definiert durch einen Vergilbungsindex (YI) von nicht mehr als 20, vorzugsweise nicht mehr als 16, bestimmt an spritzgegossenen Platten von $60 \times 60 \times 1$ mm$^3$ gemäß der Standardmethode ASTM E313.

**Revendications**

1. Article moulé comprenant une composition de polypropylène (C), la composition de polypropylène comprenant, sur la base du poids total de la composition de polypropylène (C),

    i) 70,0 à 95,0 % en poids, sur la base du poids total de la composition de polypropylène (C), d'un premier homopolymère de propylène isotactique (H-PP), qui présente

    (i-a) un indice de fluidité à chaud MFR$_2$ déterminé selon ISO 1133 à 230 °C et 2,16 kg dans la plage de 5,0 à 22,0 g/10 min ;
    (i-b) une température de fusion dans la plage de 145 à 162 °C telle que déterminée par analyse calorimétrique différentielle (DSC) ; et
    (i-c) une teneur en régio-défauts 2,1-érythro dans la plage de 0,1 à 1,3 % en moles telle que déterminée par spectroscopie RMN C$^{13}$
    et

    ii) 5,0 à 30,0 % en poids, sur la base du poids total de la composition de polypropylène (C), d'un deuxième polypropylène (PP2) différent du premier homopolymère de propylène isotactique (H-PP) et présentant une température de fusion Tm telle que mesurée par analyse calorimétrique différentielle (DSC) selon ISO 11357 dans la plage de 50 à 125 °C.

2. Article moulé selon la revendication 1, dans lequel la composition de polypropylène (C) présente

    (a) une température de fusion Tm dans la plage de 150 à 160 °C telle que déterminée par analyse calorimétrique différentielle (DSC) selon ISO 11357, et/ou
    (b) un indice de fluidité à chaud MFR$_2$ déterminé selon ISO 1133 à 230 °C et 2,16 kg dans la plage de 2,0 à 15,0 g/10 min.

3. Article moulé selon la revendication 1 ou 2, dans lequel la quantité combinée du premier homopolymère de propylène isotactique (H-PP) et du deuxième polypropylène (PP-2) dans la composition de polypropylène (C) est d'au moins 95 % en poids, et jusqu'à 5 % en poids sont des additifs (AD), sur la base du poids total de la composition de polypropylène (C).

4. Article moulé selon l'une des revendications 1 à 3 précédentes, dans lequel la composition de polypropylène (C) présente une teneur soluble dans le xylène (XCS) inférieure à 10,0 % en poids, de préférence de 1,0 à 8,0 % en poids.

5. Article moulé selon l'une des revendications 1 à 4 précédentes, dans lequel le deuxième polypropylène (PP2) présente une polydispersité (Mw/Mn) dans la plage de 1,8 à 3,0, et/ou un poids moléculaire en poids M$_w$ dans la plage de 20 à 300 kg/mol, et/ou une densité inférieure à 895 kg/m$^3$, de préférence dans une plage de 850 à 900 kg/m$^3$, et/ou une température de fusion Tm dans la plage de 70 à 100 °C.

6. Article moulé selon l'une des revendications 1 à 5 précédentes, dans lequel la composition de polypropylène (C) ne comprend pas un autre matériau polymère différent du premier homopolymère de propylène isotactique (H-PP) et du deuxième polypropylène (PP2) en une quantité dépassant 5,0 % en poids, de préférence dépassant 2,5 % en poids, sur la base du poids total de la composition de polypropylène (C).

7. Article moulé selon l'une des revendications 1 à 6 précédentes, dans lequel le premier homopolymère de propylène isotactique (H-PP) est **caractérisé par** une isotacticité élevée, définie comme étant une régularité de pentade <mmmm> supérieure à 96,0 % en moles telle que déterminée par spectroscopie RMN C$^{13}$.

8. Article moulé selon l'une des revendications 1 à 7 précédentes, dans lequel le premier homopolymère de propylène isotactique (H-PP) est préparé en présence d'un catalyseur métallocène.

9. Article moulé selon l'une des revendications 1 à 8 précédentes, dans lequel l'article moulé est un article moulé par injection, de préférence un article médical, pharmaceutique ou diagnostique, ou de manière encore davantage préférée un article sélectionné parmi la liste d'articles constituée de cathéters, de nécessaires à perfusion intraveineuse, de composants d'instruments laparoscopiques, de composants d'instruments de chirurgie, de plateaux chirurgicaux, de chariots, de dispositifs d'administration de médicaments, d'outils chirurgicaux, de diagnostics in vitro, de connecteurs de tubes, de dispositifs de fermeture de tube, de vannes, de flacons, de seringues, de pistons, de boîtes de laboratoire et de compte-gouttes.

10. Article moulé selon l'une des revendications 1 à 9 précédentes présentant un niveau de migration globale dans la composition de polymère (C), tel que déterminé selon EN ISO 1186-14:2002 sur des plaques moulées par injection de $60 \times 60 \times 1$ mm$^3$, à moins de 10,0 mg/dm$^2$, de préférence à moins de 8,0 mg/dm$^2$, de manière davantage préférée à moins de 6,0 mg/dm$^2$ et de manière encore davantage préférée à moins de 5,0 mg/dm$^2$.

11. Article moulé selon l'une des revendications 1 à 10 précédentes présentant un degré de décoloration de la composition de polymère (C) après une stérilisation par rayons gamma à 50 kGy et 60 jours de vieillissement à 80 °C tel que défini par un indice de jaunissement (YI) non supérieur à 20, de manière davantage préférée non supérieur à 16 tel que déterminé sur des plaques moulées par injection de $60 \times 60 \times 1$ mm$^3$ selon un procédé standard ASTM E313.

12. Article moulé selon l'une des revendications 1 à 11 précédentes, dans lequel l'article moulé est **caractérisé par** une résistance au choc Charpy d'éprouvettes entaillées dans la plage de 2,5 à 15,0 kJ/m$^2$, telle que déterminée selon ISO 179 leA, et une rétention de ladite résistance au choc après une stérilisation par rayons gamma à 50 kGy et 60 jours de vieillissement supérieure à 85 %, de préférence supérieure à 88 % et de manière préférée entre toutes supérieure à 90 %.

13. Emballage stérilisé comprenant l'article moulé selon l'une des revendications 1 à 12 précédentes.

14. Processus de stérilisation par rayons gamma de l'article moulé selon l'une des revendications 1 à 12 précédentes, comprenant les étapes consistant à :

   - fournir l'article moulé selon l'une des revendications 1 à 12, et
   - soumettre ledit article moulé à une stérilisation par rayons gamma, de préférence effectuée à une dose dans la plage de 15 à 150 kGy.

15. Utilisation du deuxième polypropylène (PP2) selon les revendications 1 ou 5 dans la composition de polymère (C) selon l'une des revendications 1 à 8 précédentes pour

   (a) réduire le niveau de migration globale dans la composition de polymère (C), tel que déterminé selon EN ISO 1186-14:2002 sur des plaques moulées par injection de $60 \times 60 \times 1$ mm$^3$, à moins de 10,0 mg/dm$^2$, de préférence à moins de 8,0 mg/dm$^2$, de manière davantage préférée à moins de 25,0 mg/dm$^2$ et de manière encore davantage préférée à moins de 6,0 mg/dm$^2$ ;
   et/ou
   (b) améliorer la résistance à la stérilisation par rayons gamma de ladite composition de polymère (C) ;
   et/ou
   (c) réduire la décoloration de la composition de polymère (C) après une stérilisation par rayons gamma à 50 kGy et 60 jours de vieillissement à 80 °C telle que définie par un indice de jaunissement (YI) non supérieur à 20, de manière davantage préférée non supérieur à 16 tel que déterminé sur des plaques moulées par injection de $60 \times 60 \times 1$ mm$^3$ selon un procédé standard ASTM E313.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012093098 A1
- WO 2015011135 A1
- WO 2013007650 A1

### Non-patent literature cited in the description

- *Chemical Reviews,* 2000, vol. 100 (4), 1316-1327
- **Y. MINAMI et al.** *Polymer Journal,* 2015, vol. 45, 227-234
- **HANS ZWEIFEL.** Plastic Additives Handbook. 2009, 1141-1190
- **SINGH, G ; KOTHARI, A. ; GUPTA, V.** *Polymer Testing,* 2009, vol. 28 (5), 475
- **ZHOU, Z. ; KUEMMERLE, R ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R ; PELLECCHIA, R. ; SEVERN, J. ; TALARICO, G.** *Macromol. Rapid Commun.,* 2007, vol. 28, 1128
- **CHENG, H. N.** *Macromolecules,* 1950, vol. 17 (1984
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **BUSICO, V. ; CIPULLO, R.** *Prog. Polym. Sci.,* 2001, vol. 26, 443
- **BUSICO, V. ; CIPULLO, R. ; MONACO, G ; VACATELLO, M. ; SEGRE, A.L.** *Macromoleucles,* 1997, vol. 30, 6251
- **CHENG, H. N.** *Macromolecules,* 1984, vol. 17, 1950
- **WANG, W-J., ZHU, S.** *Macromolecules,* 2000, vol. 33, 1157
- **KAKUGO, M. ; NAITO, Y. ; MIZUNUMA, K. ; MIYATAKE, T.** *Macromolecules,* 1982, vol. 15, 1150
- *CHEMICAL ABSTRACTS,* 143925-92-2
- *CHEMICAL ABSTRACTS,* 135861-56-2